(19) Europäisches Patentamt
European Patent Office
Office européen des brevets

(11) **EP 3 492 531 A1**

(12) **EUROPEAN PATENT APPLICATION**
published in accordance with Art. 153(4) EPC

(43) Date of publication:
**05.06.2019 Bulletin 2019/23**

(51) Int Cl.:
***C09B 67/04*** *(2006.01)*　　***C09D 11/322*** *(2014.01)*

(21) Application number: **17834398.4**

(86) International application number:
**PCT/JP2017/027010**

(22) Date of filing: **26.07.2017**

(87) International publication number:
**WO 2018/021396 (01.02.2018 Gazette 2018/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.07.2016　JP 2016148082**

(71) Applicant: **Kao Corporation
Tokyo 103-8210 (JP)**

(72) Inventors:
• **FUKUROI, Hironobu
Wakayama-shi
Wakayama 640-8580 (JP)**
• **UEDA, Yasufumi
Wakayama-shi
Wakayama 640-8580 (JP)**
• **SHIMIZU, Yusuke
Wakayama-shi
Wakayama 640-8580 (JP)**
• **TSURU, Isao
Wakayama-shi
Wakayama 640-8580 (JP)**

(74) Representative: **Hoffmann Eitle
Patent- und Rechtsanwälte PartmbB
Arabellastraße 30
81925 München (DE)**

(54) **MANUFACTURING METHOD FOR FINE ORGANIC PIGMENT**

(57)　The present invention relates to [1] a process for producing a fine organic pigment, including step 1 of kneading a mixture prepared by compounding a raw material organic pigment, a water-soluble inorganic salt and a water-soluble organic solvent; and step 2 of subjecting the kneaded mixture obtained in the step 1 to cleaning treatment with an aqueous solvent and then to filtration treatment, in which before or after kneading the mixture in the step 1 and before subjecting the kneaded mixture to filtration treatment in the step 2, a sulfonic acid salt dispersant is compounded in an amount of not less than 0.8 part by mass and not more than 8.0 parts by mass on the basis of 100 parts by mass of the raw material organic pigment; [2] a process for producing a dispersion, including step 3 of subjecting a pigment mixture containing the fine organic pigment obtained by the production process according to the above [1], an organic solvent and water to dispersion treatment; and [3] a process for producing an ink, including step 4 of mixing the dispersion obtained by the production process according to the above [2] with at least one medium selected from the group consisting of water and an organic solvent.

**Description**

FIELD OF THE INVENTION

The present invention relates to a process for producing a fine organic pigment, a process for producing a dispersion and a process for producing an ink.

BACKGROUND OF THE INVENTION

In ink-jet printing methods, droplets of ink are projected onto a printing medium from very fine nozzles and allowed to adhere to the printing medium to obtain printed materials on which characters, images, etc., are printed. The printed materials are required to have high optical density and gloss, whereas the inks for ink-jet printing are required to have high jetting properties. In addition, color filters for liquid crystal displays are required to exhibit high contrast ratio and brightness. Therefore, pigments used in the inks for ink-jet printing and color filters are in the form of atomized pigment particles having a very small primary particle size.

As the method of obtaining a fine organic pigment by reducing a primary particle size of an organic pigment as a raw material, there are extensively used wet-kneading and milling methods such as solvent salt milling, dry milling methods, etc. The solvent salt milling as used herein means a milling method of atomizing a powder, etc., by a wet-kneading method using a water-soluble inorganic salt as a milling medium. For example, by mechanically kneading the raw material organic pigment and the water-soluble inorganic salt together with a water-soluble organic solvent, the pigment is pulverized, so that it is possible to obtain the pigment having a small primary particle size.

JP 2011-252123A (Patent Literature 1) discloses a process for producing an atomized organic pigment, including the step of kneading a mixture of a raw material organic pigment, a milling aid and a water-soluble organic solvent by a solvent salt milling method, in which the mixture is kneaded in the presence of an organic substance containing a specific organic acid metal salt.

SUMMARY OF THE INVENTION

The present invention relates to a process for producing a fine organic pigment, including:

> Step 1: kneading a mixture prepared by compounding a raw material organic pigment, a water-soluble inorganic salt and a water-soluble organic solvent; and
> Step 2: subjecting the kneaded mixture obtained in the step 1 to cleaning treatment with an aqueous solvent and then to filtration treatment,

in which before or after kneading the mixture in the step 1 and before subjecting the kneaded mixture to filtration treatment in the step 2, a sulfonic acid dispersant is compounded in an amount of not less than 0.8 part by mass and not more than 8.0 parts by mass on the basis of 100 parts by mass of the raw material organic pigment.

DETAILED DESCRIPTION OF THE INVENTION

The wet-kneading method such as, typically, solvent salt milling, is a useful method for pulverizing a pigment. As a primary particle size of the resulting organic pigment is reduced, an ink for ink-jet printing or a color filter using the organic pigment can be further improved in performance thereof. Therefore, there is an increasing demand for methods for producing organic pigments having a smaller primary particle size. The method disclosed in Patent Literature 1 has failed to solve these conventional problems.

In addition, the atomized organic pigments having a small primary particle size tend to be readily flocculated together, and therefore tend to hardly maintain good dispersion stability. For this reason, there is also an increasing demand for fine organic pigments from which an ink having a small dispersed particle size and high optical density upon printing can be obtained.

According to the present invention, there are provided a process for producing a fine organic pigment from which an ink having a small dispersed particle size and high optical density upon printing can be obtained; a process for producing a dispersion using the fine organic pigment; and a process for producing an ink using the dispersion.

The present inventors have found that by kneading the mixture using a predetermined amount of a specific dispersant in the following step 1, it is possible to obtain an ink having a small dispersed particle size and high optical density upon printing.

The present invention relates to the following aspects [1] to [3].

[1] A process for producing a fine organic pigment, including:

Step 1: kneading a mixture prepared by compounding a raw material organic pigment, a water-soluble inorganic salt and a water-soluble organic solvent; and
Step 2: subjecting the kneaded mixture obtained in the step 1 to cleaning treatment with an aqueous solvent and then to filtration treatment,

in which before or after kneading the mixture in the step 1 and before subjecting the kneaded mixture to filtration treatment in the step 2, a sulfonic acid dispersant is compounded in an amount of not less than 0.8 part by mass and not more than 8.0 parts by mass on the basis of 100 parts by mass of the raw material organic pigment.
[2] A process for producing a dispersion, including:
Step 3: subjecting a pigment mixture containing the fine organic pigment produced by the process according to the above aspect [1], an organic solvent and water to dispersion treatment.
[3] A process for producing an ink, including:
Step 4: mixing the dispersion produced by the process according to the above aspect [2] with at least one medium selected from the group consisting of water and an organic solvent.

In accordance with the present invention, there are provided a process for producing a fine organic pigment from which an ink having a small dispersed particle size and high optical density upon printing can be obtained; a process for producing a dispersion using the fine organic pigment; and a process for producing an ink using the dispersion.

[Process for Producing Fine Organic Pigment]

The process for producing a fine organic pigment according to the present invention includes:

Step 1: kneading a mixture prepared by compounding a raw material organic pigment, a water-soluble inorganic salt and a water-soluble organic solvent; and
Step 2: subjecting the kneaded mixture obtained in the step 1 to cleaning treatment with an aqueous solvent and then to filtration treatment,

in which before or after kneading the mixture in the step 1 and before subjecting the kneaded mixture to filtration treatment in the step 2, a sulfonic acid dispersant (hereinafter also referred to merely a "dispersant") is compounded in an amount of not less than 0.8 part by mass and not more than 8.0 parts by mass on the basis of 100 parts by mass of the raw material organic pigment.
In the process for producing a fine organic pigment according to the present invention, by using a predetermined amount of the aforementioned dispersant in the step 1 or the step 2, it is possible to produce a fine organic pigment from which an ink having a small dispersed particle size and high optical density upon printing can be obtained.

[Step 1]

[Raw Material Organic Pigment]

The raw material organic pigment used in the present invention means an organic pigment before being kneaded.
As the raw material organic pigment, there is preferably used at least one pigment selected from the group consisting of condensed polycyclic pigments such as anthraquinone pigments, quinacridone pigments, indigo pigments, dioxazine pigments, perylene pigments, perinone pigments, isoindolinone pigments, isoindoline pigments, quinophthalone pigments and diketopyrrolopyrrole pigments, and azo pigments such as disazo pigments, benzimidazolone pigments and condensed azo pigments.
As the raw material organic pigment used in the present invention, more preferred is at least one pigment selected from the group consisting of quinacridone pigments and diketopyrrolopyrrole pigments. Of these organic pigments, from the viewpoint of more efficiently exhibiting the effects of the present invention, even more preferred are quinacridone pigments. It is estimated that quinacridone contains a ketone group and a secondary amino group, but both the functional groups are not adjacent to each other and no amide group is contained therein, so that formation of a strong hydrogen bond therein is prevented, and therefore the atomization effects of the present invention can be more efficiently exhibited.
Examples of the quinacridone pigments include unsubstituted quinacridone pigments, dimethyl quinacridone pigments, dichloroquinacridone pigments, and a pigment mixture of at least two pigments selected from the group consisting of the aforementioned pigments, or a solid solution of quinacridone pigments or a solid solution of a quinacridone pigment and the other pigment.

Examples of the solid solution include quinacridone solid solutions, solid solutions of quinacridone quinone and unsubstituted quinacridone, and solid solutions of dichloroquinacridone and unsubstituted quinacridone.

Specific examples of the quinacridone pigments include at least one pigment selected from the group consisting of C.I.P.V. 19 (unsubstituted quinacridone), C.I.P.R. 122 (2,9-dimethyl quinacridone), C.I.P.R. 202 (2,9-dichloroquinacridone), C.I.P.R. 206 (solid solution of quinacridone quinone and unsubstituted quinacridone), C.I.P.R. 207 (solid solution of 4,11-dichloroquinacridone and unsubstituted quinacridone), C.I.P.R. 209 (3,10-dichloroquinacridone), C.I.P.O. 48 (solid solution of quinacridone quinone and unsubstituted quinacridone), C.I.P.O. 49 (solid solution of quinacridone quinone and unsubstituted quinacridone), C.I.P.V. 42 (quinacridone solid solution), C.I.P.O. 49 (solid solution of quinacridone quinone and unsubstituted quinacridone), "CROMOPHTHAL Jet Magenta 2BC" (quinacridone solid solution) available from Ciba Specialty Chemicals Corporation, and "FASTOGEN SUPER MAGENTA RY" (quinacridone solid solution; C.I.P,R. 122) available from DIC Corporation.

The primary particle size of the raw material organic pigment is preferably not more than 500 nm, more preferably not more than 300 nm and even more preferably not more than 150 nm from the viewpoint of improving pulverization efficiency. Also, the primary particle size of the raw material organic pigment is preferably not less than 30 nm, more preferably not less than 45 nm and even more preferably not less than 60 nm from the same viewpoint as described above. The primary particle size of the raw material organic pigment may be measured by the method described in Examples below.

[Pigment Derivative]

The mixture to be kneaded may also contain various pigment derivatives. The pigment derivatives are preferably in the form of a derivative of a compound constituting the aforementioned raw material organic pigment. Examples of a substituent group contained in the pigment derivatives include a hydroxy group, a carboxy group, a carbamoyl group, a sulfo group, a sulfonamide group and a phthalimidomethyl group. In addition, the pigment derivatives also include aromatic polycyclic compounds that generally constitute no unit structure of organic pigments, such as naphthalene compounds and anthraquinone compounds. These pigment derivatives may be used alone or in the form of a mixture of any two or more thereof.

The content of the pigment derivatives in the mixture to be kneaded is preferably not less than 0.05 part by mass and more preferably not less than 0.1 part by mass on the basis of 100 parts by mass of the raw material organic pigment from the viewpoint of improving dispersibility and atomization of the pigment, and is also preferably not more than 5 parts by mass, more preferably not more than 1 part by mass and even more preferably not more than 0.2 part by mass on the basis of 100 parts by mass of the raw material organic pigment from the viewpoint of suppressing change in hue of the pigment. Further, from the viewpoint of suppressing change in hue of the pigment and atomizing the pigment particles, the mixture to be kneaded preferably contains substantially no pigment derivatives.

[Water-Soluble Inorganic Salt]

In the present invention, the water-soluble inorganic salt that is compounded in the mixture to be kneaded is preferably a metal salt, more preferably a metal chloride or a metal sulfate, and even more preferably a metal chloride, from the viewpoint of improving pulverization efficiency. The metal of the metal salt is preferably at least one metal selected from the group consisting of an alkali metal and a Group 2 element, and more preferably an alkali metal, from the viewpoint of improving water solubility, cost efficiency and availability. In addition, from the viewpoint of improving cost efficiency and availability, the metal of the metal salt is more preferably at least one metal selected from the group consisting of sodium, potassium and magnesium, and even more preferably sodium.

From the viewpoint of improving pulverization efficiency and water solubility, the water-soluble inorganic salt is preferably at least one compound selected from the group consisting of an alkali metal chloride and an alkali metal sulfate, and more preferably an alkali metal chloride. In addition, from the viewpoint of improving cost efficiency and availability, the water-soluble inorganic salt is preferably at least one compound selected from the group consisting of sodium chloride, potassium chloride, sodium sulfate, zinc chloride, calcium chloride and magnesium chloride, more preferably at least one compound selected from the group consisting of sodium chloride and sodium sulfate, and even more preferably sodium chloride.

The solubility of the water-soluble inorganic salt in 100 g of water as measured at 20°C is preferably not less than 10 g, more preferably not less than 20 g and even more preferably not less than 30 g from the viewpoint of facilitating removal of the water-soluble inorganic salt from the mixture obtained through the kneading step, and is also preferably not more than 100 g, more preferably not more than 60 g and even more preferably not more than 40 g from the viewpoint of improving pulverization efficiency.

The water-soluble inorganic salt is preferably hardly soluble in the water-soluble organic solvent, and more preferably substantially insoluble in the water-soluble organic solvent. The solubility of the water-soluble inorganic salt used in the present invention in 100 g of the water-soluble organic solvent as measured at 20°C is preferably not more than 10 g and more preferably not more than 1 g from the viewpoint of enhancing productivity of the fine organic pigment.

The water-soluble inorganic salt is preferably used in the form of particles from the viewpoint of improving handling properties. The average particle size of the water-soluble inorganic salt is preferably not more than 1000 $\mu$m, more preferably not more than 700 $\mu$m, even more preferably not more than 400 $\mu$m, further even more preferably not more than 200 $\mu$m, still further even more preferably not more than 50 $\mu$m and still further even more preferably not more than 20 $\mu$m from the viewpoint of improving pulverization efficiency, and is also preferably not less than 0.1 $\mu$m, more preferably not less than 1 $\mu$m and even more preferably not less than 5 $\mu$m from the viewpoint of enhancing productivity of the fine organic pigment. The average particle size of the water-soluble inorganic salt may be measured, for example, by the method using a laser diffraction/scattering particle size measuring apparatus "LA-950 V2" available from HORIBA Ltd., equipped with a dry measuring unit.

[Water-Soluble Organic Solvent]

In the present invention, the water-soluble organic solvent compounded in the mixture to be kneaded is preferably an organic solvent that is miscible with water at an optional ratio, from the viewpoint of facilitating removal of the water-soluble organic solvent from the kneaded mixture obtained through the kneading step.

The water-soluble organic solvent is preferably in the form of an aliphatic compound containing an alcoholic hydroxy group from the viewpoint of improving safety, cost efficiency and availability. The term "alcoholic hydroxy group" as used herein means a hydroxy group that is bonded to a carbon atom of an aliphatic hydrocarbon. The number of the alcoholic hydroxy groups contained in the aliphatic compound as the water-soluble organic solvent is preferably not less than 1 and more preferably not less than 2 from the viewpoint of improving water solubility and workability, and is also preferably not more than 3, more preferably not more than 2 and even more preferably 2 from the viewpoint of improving handling properties, cost efficiency and availability. In addition, the water-soluble organic solvent preferably contains an ether bond from the viewpoint of improving safety. The number of the ether bonds contained in the water-soluble organic solvent is preferably not more than 3 and more preferably not more than 2, and is also preferably not less than 1 and more preferably 1, from the viewpoint of improving handling properties, cost efficiency and availability.

Examples of the water-soluble organic solvent include a monohydric alcohol, a polyhydric alcohol, a glycol ether, etc. Specific examples of the water-soluble organic solvent include at least one compound selected from the group consisting of ethylene glycol, diethylene glycol, diethylene glycol monoalkyl ethers, triethylene glycol, triethylene glycol monoalkyl ethers, polyethylene glycol, propylene glycol, dipropylene glycol, dipropylene glycol monoalkyl ethers, polypropylene glycol, 2-propanol, 1-propanol, isobutyl alcohol, 1-butanol, isopentyl alcohol, 1-pentanol, isohexyl alcohol, 1-hexanol and glycerin. Of these water-soluble organic solvents, from the viewpoint of improving safety, cost efficiency and availability, preferred is a polyhydric alcohol, more preferred is at least one compound selected from the group consisting of a dihydric alcohol and a trihydric alcohol, even more preferred is at least one compound selected from the group consisting of glycol-based solvents such as diethylene glycol, propylene glycol, triethylene glycol and polyethylene glycol, and glycerin, and further even more preferred is diethylene glycol (hereinafter also referred to merely as "DEG").

These water-soluble organic solvents may be used alone or in combination of any two or more thereof.

The boiling point of the water-soluble organic solvent is preferably not lower than 100°C and more preferably not lower than 200°C, and is also, for example, not higher than 400°C, preferably not higher than 280°C and more preferably not higher than 260°C, from the viewpoint of improving safety upon kneading and suppressing evaporation of the organic solvent upon kneading. In addition, the solidification point of the water-soluble organic solvent is preferably not higher than 25°C and more preferably not higher than 0°C from the viewpoint of improving workability.

[Sulfonic Acid Dispersant]

In the present invention, from the viewpoint of improving pulverization efficiency as well as from the viewpoint of producing the fine organic pigment from which an ink having a small dispersed particle size and high optical density upon printing can be obtained, the sulfonic acid dispersant is compounded in an amount of not less than 0.8 part by mass and not more than 8.0 parts by mass on the basis of 100 parts by mass of the aforementioned raw material organic pigment. The "sulfonic acid salt dispersant" as used in the present invention means a dispersant having at least one sulfonic acid salt structure in a molecule thereof.

The sulfonic acid salt structure of the dispersant is capable of suppressing flocculation of the atomized organic pigment owing to electrostatic repulsion in the medium and allowing a hydrophobic moiety of the dispersant to adsorb onto the atomized organic pigment, and therefore contributes to improvement in dispersion stability of the organic pigment. As a result, it is considered that the pigment is improved in pulverization efficiency, so that it becomes possible to obtain an ink having a small dispersed particle size and high optical density upon printing.

Examples of the salt of the sulfonic acid salt dispersant include salts of alkali metals such as sodium and potassium; salts of metals of Group 2 elements such as calcium and magnesium; ammonium salts; alkanol amine salts; and the like.

When the amount of the dispersant compounded is less than 0.8 part by mass on the basis of 100 parts by mass of the aforementioned raw material organic pigment, it is not possible to sufficiently exhibit the effect of suppressing flocculation of the atomized organic pigment. When the amount of the dispersant compounded is more than 8.0 parts by mass on the basis of 100 parts by mass of the raw material organic pigment, it is difficult to obtain an ink having a small dispersed particle size.

The dispersant compounded in the step 1 or the step 2 may be in the form of either a low-molecular dispersant or a high-molecular dispersant. From the viewpoint of producing the fine organic pigment from which an ink having a small dispersed particle size and high optical density upon printing can be obtained, the preferred dispersant is at least one salt selected from the group consisting of alkanesulfonic acid salts, $\alpha$-olefinsulfonic acid salts, alkylbenzenesulfonic acid salts, alkylnaphthalenesulfonic acid salts, alkyldiphenyletherdisulfonic acid salts, polystyrenesulfonic acid salts, basic salts of aromatic sulfonic acid formalin condensation products and dialkyl sulfosuccinic acid salts, and the more preferred dispersant is at least one salt selected from the group consisting of basic salts of aromatic sulfonic acid formalin condensation products and dialkyl sulfosuccinic acid salts.

From the viewpoint of producing the fine organic pigment from which an ink having a small dispersed particle size and high optical density upon printing can be obtained, the dispersant is compounded before or after kneading the mixture in the step 1, and before subjecting the kneaded mixture to filtration treatment in the step 2. It is considered that the dispersant rather exhibits the effect of suppressing flocculation of the pulverized and atomized organic pigment, than contributes to pulverization itself of the raw material organic pigment upon kneading the mixture in the step 1. The time of addition of the dispersant may be either before the kneading, during the kneading or after the kneading. In addition, when adding the dispersant after the kneading, the dispersant may be added upon cleaning the kneaded mixture with an aqueous solvent in the below-mentioned step 2.

Meanwhile, from the viewpoint of producing the fine organic pigment from which an ink having a small dispersed particle size and high optical density upon printing can be obtained, the dispersant is preferably compounded before or after kneading the mixture in the step 1, and before cleaning the kneaded mixture in the step 2, and more preferably compounded before kneading the mixture in the step 1.

Examples of the alkanesulfonic acid salts include alkanesulfonic acid salts containing an alkyl group having not less than 6 and not more than 18 carbon atoms, such as hexanesulfonic acid salts, octanesulfonic acid salts, decanesulfonic acid salts, dodecanesulfonic acid salts, tetradecanesulfonic acid salts, hexadecanesulfonic acid salts and octadecanesulfonic acid salts, etc. Examples of commercially available products of the alkanesulfonic acid salts include "LATEMUL PS" (tradename) available from Kao Corporation, etc.

Examples of the $\alpha$-olefinsulfonic acid salts include $\alpha$-olefinsulfonic acid salts having 14 to 18 carbon atoms, such as tetradecenesulfonic acid salts, hexadecenesulfonic acid salts and octadecenesulfonic acid salts, etc. Examples of commercially available products of the $\alpha$-olefinsulfonic acid salts include "NEOGEN AO-90" available from DKS Co., Ltd., etc.

Examples of the alkylbenzenesulfonic acid salts include $p$-toluenesulfonic acid salts, cumenesulfonic acid salts, octylbenzenesulfonic acid salts, dodecylbenzenesulfonic acid salts, etc. Examples of commercially available products of the alkylbenzenesulfonic acid salts include "NEOPELEX" series products available from Kao Corporation, such as "NEOPELEX GS", "NEOPELEX G-15", "NEOPELEX G-25" and "NEOPELEX G-65", and "NEWREX" series products available from NOF Corporation, such as "NEWREX R-25L" and "NEWREX R".

Examples of the alkylnaphthalenesulfonic acid salts include alkylnaphthalenesulfonic acid salts containing an alkyl group having not less than 3 and not more than 12 carbon atoms, such as mono-, di- or tri-isopropylnaphthalenesulfonic acid salts, octylnaphthalenesulfonic acid salts and dodecylnaphthalenesulfonic acid salts. Examples of commercially available products of the alkylnaphthalenesulfonic acid salts include "PELEX NB-L" (tradename) available from Kao Corporation, etc.

Examples of the alkyldiphenyletherdisulfonic acid salts include alkyldiphenyletherdisulfonic acid salts containing an alkyl group having not less than 8 and not more than 12 carbon atoms, such as dodecyldiphenyletherdisulfonic acid salts. Examples of commercially available products of the alkyldiphenyletherdisulfonic acid salts include "PELEX" series products available from Kao Corporation, such as "PELEX SS-L" and "PELEX SS-H".

The polystyrenesulfonic acid salts are in the form of a high-molecular dispersant containing a constitutional unit derived from a styrenesulfonic acid salt. Examples of commercially available products of the polystyrenesulfonic acid salts include "PolyNaSS" series products available from Tosoh Organic Chemical Co., Ltd., such as "PolyNaSS PS-1", "PolyNaSS PS-5", "PolyNaSS PS-50" and "PolyNaSS PS-100".

The aromatic sulfonic acid formalin condensation products are in the form of a condensate of an aromatic sulfonic acid and formaldehyde. Examples of the aromatic sulfonic acid include monocyclic aromatic sulfonic acids such as cresolsulfonic acid and phenolsulfonic acid; polycyclic aromatic sulfonic acids such as alkylnaphthalenesulfonic acids,

e.g., $\alpha$-naphthalenesulfonic acid, $\beta$-naphthalenesulfonic acid, $\alpha$-naphtholsulfonic acid, $\beta$-naphtholsulfonic acid, methyl-naphthalenesulfonic acid and butylnaphthalenesulfonic acid, and creosote oil-sulfonic acids; and ligninsulfonic acids. Of these aromatic sulfonic acids, preferred are $\alpha$-naphthalenesulfonic acid and $\beta$-naphthalenesulfonic acid.

Examples of the basic salts of the aromatic sulfonic acid formalin condensation products include basic salts of $\alpha$- or $\beta$-naphthalenesulfonic acid formalin condensation products ($\alpha$-naphthalenesulfonic acid formalin condensation products and $\beta$-naphthalenesulfonic acid formalin condensation products are also hereinafter collectively referred to merely as "naphthalenesulfonic acid formalin condensation products"). Of these basic salts of the aromatic sulfonic acid formalin condensation products, preferred are basic salts of the naphthalenesulfonic acid formalin condensation products.

The naphthalenesulfonic acid formalin condensation products may also contain the other constitutional units unless the advantageous effects of the present invention are adversely affected thereby. Examples of the other constitutional units contained in the naphthalenesulfonic acid formalin condensation products include constitutional units derived from compounds that are copolymerizable with the condensation products, such as alkylnaphthalenesulfonic acids.

The basic salts of the aromatic sulfonic acid formalin condensation products may be, for example, in the form of a sodium salt, a potassium salt, an ammonium salt, etc. Of these salts, preferred is at least one salt selected from the group consisting of a sodium salt and an ammonium salt.

The weight-average molecular weight of the aromatic sulfonic acid formalin condensation products is preferably not more than 200,000, more preferably not more than 100,000, even more preferably not more than 80,000 and further even more preferably not more than 50,000, and is also preferably not less than 1,000, more preferably not less than 3,000, even more preferably not less than 4,000 and further even more preferably not less than 5,000.

As the method of producing the aromatic sulfonic acid formaldehyde (formalin) condensation products, there may be mentioned, for example, the method in which an aromatic sulfonic acid and formaldehyde are subjected to condensation reaction to obtain a condensate thereof, and then the resulting condensate is neutralized with a basic substance. Meanwhile, water-insoluble substances being present in the reaction system may be removed after the neutralization.

Examples of commercially available products of the basic salts of the aromatic sulfonic acid formalin condensation products include "DEMOL" series products available from Kao Corporation, such as "DEMOL AS", "DEMOL MS", "DEMOL N", "DEMOL NL", "DEMOL RN", "DEMOL RN-L", "DEMOL SC-30", "DEMOL SC-B", "DEMOL SN-B", "DEMOL SS-L", "DEMOL T" and "DEMOL T-45".

The dialkyl sulfosuccinic acid salts are preferably those dialkyl sulfosuccinic acid salts containing an alkyl group having not less than 4 and not more than 12 carbon atoms, more preferably those dialkyl sulfosuccinic acid salts containing an alkyl group having not less than 6 and not more than 10 carbon atoms, even more preferably at least one salt selected from the group consisting of dioctylsulfosuccinic acid salts and di-2-ethylhexylsulfosuccinic acid salts, and further even more preferably dioctylsulfosuccinic acid salts. As the salts of the dialkyl sulfosuccinic acid salts, there may be mentioned, for example, a sodium salt, a potassium salt, an ammonium salt, etc. Of these salts, preferred is a sodium salt.

Examples of commercially available products of the dialkyl sulfosuccinic acid salts include "PELEX" series products available from Kao Corporation, such as "PELEX OT-P", "PELEX TA" and "PELEX TR", and "NEOCOAL" series products available from DKS Co., Ltd., such as "NEOCOAL SW-C", "NEOCOAL P" and "NEOCOAL YSK".

The amount of the dispersant compounded in the step 1 or the step 2 is not less than 0.8 part by mass, preferably not less than 1.2 parts by mass, more preferably not less than 3.0 parts by mass, even more preferably not less than 4.0 parts by mass and further even more preferably not less than 5.0 parts by mass, and is also not more than 8.0 parts by mass, preferably not more than 7.5 parts by mass, more preferably not more than 7.0 parts by mass, even more preferably not more than 6.0 parts by mass and further even more preferably not more than 6.5 parts by mass, on the basis of 100 parts by mass of the raw material organic pigment, from the viewpoint of improving pulverization efficiency.

In addition, the amount of the dispersant compounded is not less than 0.8 part by mass, preferably not less than 1.2 parts by mass, more preferably not less than 3.0 parts by mass, even more preferably not less than 4.0 parts by mass, further even more preferably not less than 5.0 parts by mass, still further even more preferably not less than 6.0 parts by mass and still further even more preferably not less than 6.5 parts by mass on the basis of 100 parts by mass of the raw material organic pigment from the viewpoint of producing the fine organic pigment from which an ink having high optical density upon printing can be obtained, and is also not more than 8.0 parts by mass, preferably not more than 7.5 parts by mass and more preferably not more than 7.0 parts by mass on the basis of 100 parts by mass of the raw material organic pigment from the viewpoint of producing the fine organic pigment from which an ink having a small dispersed particle size can be obtained.

Furthermore, the amount of the dispersant compounded is not less than 0.8 part by mass, preferably not less than 1.2 parts by mass, more preferably not less than 3.0 parts by mass, even more preferably not less than 4.0 parts by mass, further even more preferably not less than 5.0 parts by mass, still further even more preferably not less than 6.0 parts by mass and still further even more preferably not less than 6.5 parts by mass, and is also not more than 8.0 parts by mass, preferably not more than 7.5 parts by mass and more preferably not more than 7.0 parts by mass, on the basis of 100 parts by mass of the raw material organic pigment, from the viewpoint of producing the fine organic pigment from which an ink having a small dispersed particle size and high optical density upon printing can be obtained.

Also, from the viewpoint of producing the fine organic pigment from which an ink having a small dispersed particle size and high optical density upon printing can be obtained, the amount of the dispersant compounded is preferably not less than 0.05 part by mass, more preferably not less than 0.07 part by mass, even more preferably not less than 0.1 part by mass, further even more preferably not less than 0.3 part by mass and still further even more preferably not less than 0.5 part by mass, and is also preferably not more than 2 parts by mass, more preferably not more than 1.5 parts by mass, even more preferably not more than 1.2 parts by mass and further even more preferably not more than 1 part by mass, on the basis of the mixture obtained by compounding the raw material organic pigment, the water-soluble inorganic salt and the water-soluble organic solvent.

[Other Components]

From the viewpoint of facilitating atomization of the pigment, water may be compounded into the mixture to be kneaded in the present invention.

In addition, from the viewpoint of facilitating atomization of the pigment, the mixture to be kneaded in the present invention may also contain a water-soluble basic compound. Examples of the water-soluble basic compound include amines such as methylamine, dimethylamine, trimethylamine, ethylamine, diethylamine and triethylamine; inorganic basic compounds such as ammonia, and hydroxides, oxides and carbonates of metals; and mixtures of these compounds; and the like.

[Kneading Conditions]

The step 1 (hereinafter also referred to as a "kneading step") is the step of kneading a mixture prepared by compounding the raw material organic pigment, the water-soluble inorganic salt and the water-soluble organic solvent with each other.

The time of addition of the dispersant is not particularly limited as long as the dispersant is added before or after kneading the mixture in the step 1 and before subjecting the kneaded mixture to filtration treatment in the step 2 as described hereinbefore. However, from the viewpoint of producing the fine organic pigment from which an ink having a small dispersed particle size and high optical density upon printing can be obtained, the step 1 is such a step in which the raw material organic pigment, the water-soluble inorganic salt and the water-soluble organic solvent are compounded with each other, and preferably further compounded together with the predetermined dispersant in an amount of not less than 0.8 part by mass and not more than 8.0 parts by mass on the basis of 100 parts by mass of the aforementioned raw material organic pigment, and the resulting mixture is kneaded. Although the dispersant may be compounded even after kneading the mixture, it is preferred that the dispersant is compounded before kneading the mixture from the viewpoint of producing the fine organic pigment having a small primary particle size.

The mixture may be further compounded with at least one material selected from the group consisting of water and the water-soluble basic compound. The mixture obtained through the kneading step (hereinafter also referred to as merely the "kneaded mixture") contains the fine organic pigment having a small primary particle size.

The kneading step may be carried out using various kneading devices such as a batch type kneader and a continuous type kneader, and a kneader of a normal pressure type, an applied pressure type or a reduced pressure type. Examples of the kneading devices include roll mills such as a twin roll mill, a triple roll mill and a multiple roll mill; extruders such as a single-screw extruder and a twin-screw extruder; and stirring type kneaders such as a planetary mixer. As the stirring type kneader, there may be mentioned "TRIMIX" available from INOUE MFG., INC., and the like. Also, as the extruder, there may be mentioned "KRC Kneader" available from Kurimoto Ltd., "MIRACLE K.C.K." available from Asada Iron Works Co., Ltd., and the like.

The temperature of the mixture upon kneading is preferably not higher than 120°C, more preferably not higher than 100°C, even more preferably not higher than 80°C and further even more preferably not higher than 60°C from the viewpoint of improving pulverization efficiency and suppressing evaporation of water, and is also preferably not lower than 20°C and more preferably not lower than 40°C from the viewpoint of reducing load for cooling.

The time of the kneading step, i.e., the kneading time, is preferably not less than 0.5 hour, more preferably not less than 1 hour and even more preferably not less than 1.5 hours from the viewpoint of facilitating atomization of the pigment, and is also preferably not more than 15 hours, more preferably not more than 10 hours, even more preferably not more than 5 hours and further even more preferably not more than 3.5 hours from the viewpoint of enhancing productivity of the fine organic pigment.

(Step 1-1 and Step 1-2)

The kneading step may be conducted, for example, by the method in which the raw material organic pigment, the water-soluble inorganic salt, the water-soluble organic solvent and the dispersant which are used in the present invention are filled in the aforementioned kneading device or the like, and kneaded together therein. From the viewpoint of attaining uniform compositional distribution of the dispersant in the mixture to be kneaded, the kneading step preferably includes a step of mixing the raw material organic pigment, the water-soluble inorganic salt and the water-soluble organic solvent which are used in the present invention, with each other (hereinafter also referred to as "step 1-1"); and a step of kneading a mixture including the mixture obtained in the step 1-1 and the dispersant as well as, if required, at least one material as an optional component selected from the group consisting of water and a water-soluble basic compound (hereinafter also referred to as "step 1-2"). More specifically, the step 1-2 is such a step in which the mixture obtained in the step 1-1 and the dispersant are kneaded with each other, and further kneaded, if required, together with the at least one material selected from the group consisting of water and the water-soluble basic compound. Form the viewpoint of improving workability, the step 1-1 and the step 1-2 are more preferably carried out in the same kneading device.

When compounding the at least one material selected from the group consisting of water and the water-soluble basic compound, the step 1-2 is preferably the step of kneading a mixture including the mixture obtained in the step 1-1, the dispersant and the at least one material selected from the group consisting of water and the water-soluble basic compound.

The amount of the water-soluble inorganic salt compounded in the mixture to be kneaded is preferably not less than 100 parts by mass, more preferably not less than 300 parts by mass and even more preferably not less than 400 parts by mass on the basis of 100 parts by mass of the raw material organic pigment from the viewpoint of improving pulverization efficiency, and is also preferably not more than 3000 parts by mass, more preferably not more than 1000 parts by mass, even more preferably not more than 800 parts by mass and further even more preferably not more than 600 parts by mass on the basis of 100 parts by mass of the raw material organic pigment from the viewpoint of enhancing productivity of the fine organic pigment.

The amount of the water-soluble organic solvent compounded in the mixture to be kneaded is preferably not less than 10 parts by mass, more preferably not less than 50 parts by mass and even more preferably not less than 100 parts by mass on the basis of 100 parts by mass of the raw material organic pigment from the viewpoint of improving pulverization efficiency, and is also preferably not more than 500 parts by mass, more preferably not more than 300 parts by mass, even more preferably not more than 200 parts by mass and further even more preferably not more than 150 parts by mass on the basis of 100 parts by mass of the raw material organic pigment from the same viewpoint as described above.

[Step 2]

From the viewpoint of facilitating removal of the water-soluble inorganic salt, the water-soluble organic solvent and the like from the kneaded mixture, the step 2 is the step of subjecting the kneaded mixture obtained in the step 1 to cleaning treatment with an aqueous solvent and then to filtration treatment (hereinafter also referred to merely as a "cleaning step").

The cleaning step may be performed, for example, by the following method. That is, the kneaded mixture is mixed while stirring with an aqueous solvent such as water which is used in an amount enough to dissolve the water-soluble inorganic salt and the water-soluble organic solvent contained in the kneaded mixture, thereby obtaining a dispersion of the pigment. Next, the resulting dispersion is subjected to filtration treatment, and the obtained wet cake is further cleaned with the aqueous solvent to thereby obtain a paste of a fine organic pigment from which the water-soluble inorganic salt and the water-soluble organic solvent are removed (hereinafter also referred to merely as a "pigment paste"). In addition, in the case where the dispersant is added after kneading the mixture in the step 1, the dispersant may be added upon subjecting the kneaded mixture to cleaning treatment with the aqueous solvent in the step 2, i.e., before subjecting the resulting dispersion of the pigment to filtration treatment.

The filtration treatment in the cleaning step may be carried out, for example, using a filter press. As the commercially available filter press, there may be mentioned a Yabuta-type filter press "ROUND TESTER YTO-8 Model" available from Yabuta Kikai Co., Ltd., and a closed automatic continuous pressure filter "Rotary Filter" available from Kotobuki Industries Co., Ltd. The pressure applied upon the filtration treatment is, for example, from 0.1 to 1 MPa.

The aqueous solvent used in the cleaning step is preferably water, and more preferably at least one water selected from the group consisting of tap water, ion-exchanged water, distilled water, ground water and a mineral acid aqueous solution from the viewpoint of improving cleanability. The aqueous solvent used in the cleaning step is even more preferably ion-exchanged water from the viewpoint of maintaining good quality of the resulting fine organic pigment, and further even more preferably ground water and a mineral acid aqueous solution from the viewpoint of improving cost efficiency.

(Drying Step (Step 2-2))

In addition, if required, the pigment paste obtained through the cleaning step may be further subjected to drying and pulverization, thereby obtaining the fine organic pigment in the form of a powder.

[Fine Organic Pigment]

The fine organic pigment obtained by the production process of the present invention may be either the pigment paste obtained in the above step 2, or the powdery fine organic pigment obtained through the above drying step. From the viewpoint of obtaining a good dispersion of the pigment in the below-mentioned step 3, the fine organic pigment obtained by the production process of the present invention is preferably in the form of the pigment paste obtained in the above step 2.

The fine organic pigment obtained by the production process of the present invention includes, for example, the pigment derived from the above raw material organic pigment and a pigment derivative that may be optionally added thereto. In addition, the fine organic pigment has a smaller primary particle size than that of the raw material organic pigment. For example, the ratio of the primary particle size of the fine organic pigment to the primary particle size of the raw material organic pigment (primary particle size of fine organic pigment/primary particle size of raw material organic pigment) is preferably not more than 0.95, more preferably not more than 0.8, even more preferably not more than 0.7 and further even more preferably not more than 0.65. Also, from the viewpoint of improving working efficiency, the ratio of the primary particle size of the fine organic pigment to the primary particle size of the raw material organic pigment is also preferably not less than 0.01, more preferably not less than 0.1, even more preferably not less than 0.2, further even more preferably not less than 0.3, still further even more preferably not less than 0.4 and still further even more preferably not less than 0.5.

The primary particle size of the fine organic pigment may vary depending upon the kind and use or applications of the pigment. For example, the primary particle size of the fine organic pigment is preferably not less than 10 nm, more preferably not less than 20 nm, even more preferably not less than 30 nm, further even more preferably not less than 40 nm and still further even more preferably not less than 50 nm, and is also preferably not more than 130 nm, more preferably not more than 100 nm, even more preferably not more than 70 nm and further even more preferably not more than 60 nm.

In addition, the primary particle size of the fine organic pigment may be suitably controlled by appropriately selecting the raw material organic pigment and adjusting amounts of the respective components compounded in the mixture to be kneaded and the kneading conditions such as kneading time.

Meanwhile, the primary particle size of the fine organic pigment or the like may be measured by the method described in Examples below.

The fine organic pigment obtained by the production process of the present invention may be suitably used in the applications such as inks for ink-jet printing and color filters, as well as in the applications such as printing inks other than the inks for ink-jet printing, e.g., inks for gravure printing or flexographic printing, paints, colored resin molded articles and toners for development of electrostatic latent images. Of these applications, the fine organic pigment of the present invention is preferably used for ink-jet printing. The ink-jet printing method may be, for example, such a method in which droplets of ink are ejected from nozzles and allowed to adhere onto a printing medium to obtain printed materials on which characters or images are printed.

[Process for Producing Dispersion]

The dispersion of the present invention is produced using the aforementioned fine organic pigment.

The dispersion may be efficiently produced, for example, by the process including the step of dispersing a mixture containing the fine organic pigment and a solvent.

[Step 3]

The dispersion of the present invention is preferably produced by the process including the following step 3:
Step 3: subjecting a pigment mixture containing the aforementioned fine organic pigment, an organic solvent and water to dispersion treatment.

The fine organic pigment used in the step 3 may be in the form of either a paste of the fine organic pigment obtained in the aforementioned step 2 or a powdery fine organic pigment obtained through the aforementioned drying step.

Also, the dispersion is more preferably efficiently produced by the process including the following step 3:
Step 3: subjecting a pigment mixture containing the aforementioned paste of the fine organic pigment, an organic solvent and water to dispersion treatment.

In the aforementioned step 3, a polymer may be added, if required, to the pigment mixture, and furthermore a neutralizing agent, a crosslinking agent, etc., may also be added, if required, to the pigment mixture.

By distilling off the organic solvent from the dispersion obtained in the step 3 by conventionally known methods to render the dispersion aqueous, it is possible to obtain a water dispersion of the fine organic pigment. From the viewpoint of improving working environments and reducing burden on the environments, the fine organic pigment is used in the form of a water dispersion thereof. The term "water dispersion" as used in the present invention means a dispersion in which the pigment particles are dispersed in such a medium that water has a largest content among components of the medium.

[Water]

Specific examples of the water include tap water, ion-exchanged water and distilled water. Of these waters, preferred is ion-exchanged water.

[Organic Solvent]

Specific examples of the organic solvent include ketone solvents such as acetone, methyl ethyl ketone (hereinafter also referred to merely as "MEK"), methyl isobutyl ketone and diethyl ketone; alcohol solvents such as methanol, ethanol, propanol and butanol; ether solvents such as dibutyl ether, tetrahydrofuran, dioxane, propylene glycol monomethyl ether acetate (hereinafter also referred to merely as "PGMEA") and diethylene glycol monobutyl ether acetate (hereinafter also referred to merely as "BCA"); and ester solvents such as ethyl acetate and butyl acetate. Of these organic solvents, preferred are acetone, MEK and PGMEA.

In the aforementioned step 3, there are used the organic solvent and water. The aforementioned organic solvent is preferably a ketone solvent, and more preferably MEK.

[Polymer]

A polymer may also be used upon conducting the dispersion treatment in order to improve dispersion stability of the pigment. The pigment mixture preferably further contains the polymer. Examples of the polymer include polyesters, polyurethanes and vinyl-based polymers. Of these polymers, from the viewpoint of improving storage stability of the resulting dispersion or water dispersion, preferred are vinyl-based polymers, and more preferred are vinyl-based polymers obtained by addition-polymerizing at least one vinyl-based monomer selected from the group consisting of a vinyl compound, a vinylidene compound and a vinylene compound.

The polymer is preferably in the form of an anionic polymer from the viewpoint of improving dispersibility of the pigment. The term "anionic" as used herein means that an unneutralized substance has a pH value of less than 7 when dispersed or dissolved in pure water. Otherwise, if the substance is insoluble in pure water and therefore it is impossible to clearly measure a pH value thereof, the term "anionic" as used herein means that a dispersion prepared by dispersing the substance in pure water has a negative zeta potential.

The polymer used in the present invention is preferably a vinyl-based polymer that is produced by copolymerizing a monomer mixture containing (a) an anionic monomer (hereinafter also referred to merely as a "component (a)") and (b) a hydrophobic monomer (hereinafter also referred to merely as a "component (b)") (such a mixture is hereinafter also referred to merely as a "monomer mixture").

The vinyl-based polymer preferably contains a constitutional unit derived from the component (a) and a constitutional unit derived from the component (b).

[Anionic Monomer: Component (a)]

The component (a) is preferably used as a monomer component constituting the polymer used in the present invention. It is considered that the constitutional unit derived from the component (a) is capable of stably dispersing the pigment in the dispersion or water dispersion owing to electrostatic repulsion.

Examples of the component (a) include monomers containing an anionic group such as a carboxy group, a sulfo group, a phosphoric group and a phosphonic group. Of these monomers, from the viewpoint of improving dispersion stability of the pigment, preferred are monomers containing a carboxy group, and more preferred is at least one monomer selected from the group consisting of acrylic acid and methacrylic acid.

[Hydrophobic Monomer: Component (b)]

The component (b) is preferably used as a monomer component constituting the polymer used in the present invention. It is considered that the constitutional unit derived from the component (b) is capable of promoting adsorption of the polymer onto the surface of the pigment, and thereby contributes to improvement in dispersion stability of the pigment.

The component (b) is preferably at least one monomer selected from the group consisting of an alkyl (meth)acrylate and an aromatic compound having an ethylenic double bond (hereinafter also referred to merely as an "aromatic monomer"). Of these monomers, from the viewpoint of improving dispersion stability of the pigment, preferred is the aromatic monomer.

The aromatic monomer is preferably a vinyl monomer containing an aromatic group having not less than 6 and not more than 22 carbon atoms, and more preferably at least one monomer selected from the group consisting of a styrene-based monomer and an aromatic group-containing (meth)acrylate from the viewpoint of facilitating production of the polymer.

The styrene-based monomer is preferably at least one monomer selected from the group consisting of $\alpha$-methyl styrene and styrene, and more preferably styrene, from the viewpoint of attaining good availability thereof.

The aromatic group-containing (meth)acrylate is preferably at least one compound selected from the group consisting of benzyl (meth)acrylate and phenoxyethyl (meth)acrylate and more preferably benzyl (meth)acrylate, from the viewpoint of attaining good availability thereof. The term "(meth)acrylate" as used in the present specification means at least one compound selected from the group consisting of an acrylate and a methacrylate.

[Other Monomer Components]

The monomer mixture may also contain, in addition to the aforementioned components (a) and (b), the other monomer components from the viewpoint of improving dispersion stability of the pigment. Examples of the other monomer components include alkoxypolyalkylene glycol (meth)acrylates, macromers containing a polymerizable functional group at one terminal end thereof and having a number-average molecular weight of 500 or more, etc.

The preferred contents of the respective constitutional units derived from the components (a) and (b) in the polymer are as follows.

The content of the constitutional unit derived from the component (a) in the polymer is preferably not less than 2% by mass and more preferably not less than 10% by mass, and is also preferably not more than 40% by mass and more preferably not more than 30% by mass, from the viewpoint of improving dispersion stability of the pigment and storage stability of the resulting ink.

The content of the constitutional unit derived from the component (b) in the polymer is preferably not less than 40% by mass and more preferably not less than 60% by mass, and is also preferably not more than 98% by mass and more preferably not more than 85% by mass, from the viewpoint of improving dispersion stability of the pigment and enhancing optical density of the resulting ink upon printing.

(Production of Polymer)

The polymer used in the present invention may be produced, for example, by copolymerizing the monomer mixture by conventionally known methods. The preferred contents of the components (a) and (b) in the monomer mixture are the same as the preferred contents of the respective constitutional units derived from the components (a) and (b) in the aforementioned polymer.

As the polymerization method, preferred is a solution polymerization method. The solvent used in the solution polymerization method is preferably at least one solvent selected from the group consisting of ketones, alcohols, ethers and esters which have not less than 4 and not more than 8 carbon atoms, more preferably ketones having not less than 4 and not more than 8 carbon atoms, and even more preferably MEK, from the viewpoint of facilitating production of the polymer and improving dispersibility of the pigment.

The polymerization may be carried out in the presence of a conventionally known polymerization initiator or a conventionally known chain transfer agent. The polymerization initiator is preferably an azo compound, and more preferably 2,2'-azobis(2,4-dimethylvaleronitrile), and the chain transfer agent is preferably mercaptans, and more preferably 2-mercapto ethanol.

The preferred polymerization conditions may vary depending upon the kinds of polymerization initiator, monomers, solvent, etc., to be used therein. The polymerization temperature is preferably not lower than 50°C and not higher than 80°C, and the polymerization time is preferably not less than 1 hour and not more than 20 hours. The polymerization is preferably conducted in an atmosphere of an inert gas such as nitrogen gas and argon.

After completion of the polymerization reaction, the polymer thus produced may be isolated from the reaction solution by conventionally known methods such as reprecipitation, removal of the solvent by distillation or the like. The thus obtained polymer may be subjected to reprecipitation, membrane separation, chromatography, extraction, etc., for removing unreacted monomers, etc., therefrom.

The weight-average molecular weight of the polymer is preferably not less than 5,000 and more preferably not less than 10,000, and is also preferably not more than 500,000, more preferably not more than 400,000, even more preferably not more than 300,000 and further even more preferably not more than 200,000, from the viewpoint of improving dispersion stability of the pigment.

Examples of commercially available products of the polymer include "JONCRYL" series products such as "JONCRYL 67", "JONCRYL 68", "JONCRYL 678", "JONCRYL 680", "JONCRYL 682", "JONCRYL 683", "JONCRYL 690" and "JONCRYL 819" all available from BASF Japan, Ltd., etc.

[Neutralizing Agent]

In the present invention, in the case where the polymer contains an anionic group, the anionic group may be neutralized with a neutralizing agent. Examples of the neutralizing agent used for the neutralization include bases such as lithium hydroxide, sodium hydroxide, potassium hydroxide, ammonia and various amines.

The degree of neutralization of the polymer is preferably not less than 10 mol%, more preferably not less than 20 mol% and even more preferably not less than 30 mol% from the viewpoint of improving dispersion stability of the pigment, and is also preferably not more than 90 mol%, more preferably not more than 80 mol% and even more preferably not more than 70 mol% from the viewpoint of improving dispersibility of the pigment.

The degree of neutralization of the polymer is calculated according to the following formula:

$$\text{Degree of neutralization (mol\%)} = \{[\text{mass (g) of neutralizing agent/gram equivalent of neutralizing agent}]/[\text{acid value (mgKOH/g) of polymer x mass (g) of polymer}/(56 \times 1000)]\} \times 100.$$

The acid value of the polymer may be calculated from the mass ratio between the monomer components used upon production of the polymer, or may also be determined by the method of subjecting a solution prepared by dissolving the polymer in a solvent such as MEK in which the polymer can be dissolved, to titration with an alkaline agent.

The amount of the polymer compounded in the pigment mixture in the step 3 is preferably not less than 10 parts by mass and more preferably not less than 20 parts by mass on the basis of 100 parts by mass of the fine organic pigment from the viewpoint of improving dispersion stability of the pigment, and is also preferably not more than 100 parts by mass and more preferably not more than 60 parts by mass on the basis of 100 parts by mass of the fine organic pigment from the same viewpoint as described above.

[Crosslinking Agent]

In the present invention, in order to enhance storage stability of the dispersion and the resulting ink, the polymer may be crosslinked with a crosslinking agent containing two or more reactive functional groups in a molecule thereof. Examples of the crosslinking agent include compounds containing two or more epoxy groups in a molecule thereof, such as ethylene glycol diglycidyl ether. In the case where the polymer is crosslinked using the crosslinking agent, the crosslinking agent and the polymer are preferably reacted with each other after dispersing the pigment mixture in the step 3.

The method of dispersing the pigment mixture in the step 3 may be selected from optional methods. Preferably, the pigment mixture is first subjected to preliminary dispersion treatment and then to substantial dispersion treatment by applying a shear stress thereto from the viewpoint of well controlling the average particle size of the obtained pigment particles to a desired value.

Upon subjecting the pigment mixture to the preliminary dispersion treatment, there may be used ordinary mixing and stirring devices such as anchor blades and disper blades. Specific examples of the preferred mixing and stirring devices include high-speed stirring mixers such as "Ultra Disper", "Dispamill" available from Asada Iron Works Co., Ltd., "Milder" available from Ebara Corporation, "Milder" available from Pacific Machinery & Engineering Co., Ltd., and "TK Homomixer", "TK Pipeline Mixer", "TK Homo Jetter", "TK Homomic Line Flow" and "Filmix" all available from Primix Co., Ltd.

As a means for applying a shear stress to the pigment mixture in the substantial dispersion treatment, there may be used, for example, kneading machines such as roll mills, kneaders and extruders, homo-valve-type high-pressure homogenizers such as typically "High-Pressure Homogenizer" available from Izumi Food Machinery Co., Ltd., chamber-type high-pressure homogenizers such as "MICROFLUIDIZER" available from Microfluidics Corp., "Nanomizer" available from Yoshida Kikai Kogyo Co., Ltd., and "Ultimizer" and ""Starburst" both available from Sugino Machine Ltd., and media type dispersers such as a paint shaker and a beads mill. Examples of commercially available products of the media type dispersers include "Ultra Apex Mill" available from Kotobuki Industries Co., Ltd., "Pico Mill" available from Asada Iron Works Co., Ltd., and "Dainomill" available from Shinmaru Enterprise Corp. These apparatuses may be used in combination of any two or more thereof. Among these apparatuses, the high-pressure homogenizers and the media type dispersers are preferably used from the viewpoint of reducing a particle size of the pigment particles and stabilizing the resulting dispersion.

The dispersion treatment in the step 3 is preferably conducted using the high-pressure homogenizers.

The temperature upon the dispersion treatment is preferably not lower than 5°C, and is also preferably not higher than 50°C and more preferably not higher than 35°C, from the viewpoint of enhancing dispersibility of the pigment.

The dispersing time is preferably not less than 1 hour, and is also preferably not more than 30 hours and more preferably not more than 25 hours, from the viewpoint of improving dispersibility of the pigment.

When using the high-pressure homogenizer in the step 3, the treating pressure of the dispersion treatment is preferably not less than 50 MPa, more preferably not less than 100 MPa and even more preferably not less than 120 MPa, and is also preferably not more than 600 MPa, more preferably not more than 300 MPa and even more preferably not more than 200 MPa.

When using the high-pressure homogenizer in the step 3, the number of passes through the homogenizer is preferably not less than 3, more preferably not less than 5 and even more preferably not less than 10, and is also preferably not more than 60, more preferably not more than 40 and even more preferably not more than 30.

The content of the fine organic pigment in the dispersion is preferably not less than 5% by mass and more preferably not less than 10% by mass, and is also preferably not more than 50% by mass and more preferably not more than 40% by mass.

The content of the polymer in the dispersion is preferably not less than 2% by mass and more preferably not less than 3% by mass, and is also preferably not more than 40% by mass and more preferably not more than 20% by mass.

The total content of water and the organic solvent in the dispersion is preferably not less than 10% by mass, and is also preferably not more than 93% by mass, more preferably not more than 90% by mass, even more preferably not more than 70% by mass and further even more preferably not more than 50% by mass.

The dispersion thus prepared using the aqueous medium may be further compounded with the water-soluble organic solvent and, if required, ordinary additives such as a wetting agent, and the resulting dispersion may be used as a water-based ink. The water-based ink may be used for ink-jet printing.

When the dispersion is prepared using the organic solvent, the resulting dispersion may be used as a coloring composition (color resist) for color filters and a raw material for the coloring composition.

[Production of Ink]

[Step 4]

The process for producing an ink according to the present invention include the following step 4:
Step 4: mixing the dispersion obtained by the above process with at least one medium selected from the group consisting of water and an organic solvent.

By conducting the step 4, it is possible to obtain an ink, preferably a water-based ink, which is capable of exhibiting desired ink properties such as concentration and viscosity.

Examples of the organic solvent used in the step 4 include polyhydric alcohols, polyhydric alcohol alkyl ethers, polyhydric alcohol alkyl ether acetates and nitrogen-containing heterocyclic compounds.

Specific examples of the polyhydric alcohols include DEG, propylene glycol, 1,2-hexanediol, 1,3-hexanediol, 1,6-hexanediol, triethylene glycol and glycerin. Of these polyhydric alcohols, preferred is at least one compound selected from the group consisting of glycerin, propylene glycol and DEG.

Specific examples of the polyhydric alcohol alkyl ethers include diethylene glycol monoalkyl ethers and triethylene glycol monoalkyl ethers. Of these compounds, preferred is triethylene glycol monobutyl ether.

Specific examples of the polyhydric alcohol alkyl ether acetates include PGMEA and BCA.

Specific examples of the nitrogen-containing heterocyclic compounds include N-methyl-2-pyrrolidone and 2-pyrrolidone.

These organic solvents may be used alone or in combination of any two or more thereof.

In the step 4, in addition to the aforementioned water and organic solvent, various additives such as a humectant, a wetting agent, a penetrant, a surfactant, a viscosity modifier, a defoaming agent, an antiseptic agent, a mildew-proofing agent and a rust preventive may be mixed in the dispersion.

The solid content of the ink obtained by the production process of the present invention is preferably not less than 1% by mass, more preferably not less than 2% by mass and even more preferably not less than 3% by mass from the viewpoint of obtaining an ink having a high concentration and enhancing optical density of the resulting ink upon printing, and is also preferably not more than 30% by mass, more preferably not more than 20% by mass and even more preferably not more than 15% by mass from the viewpoint of improving dispersion stability of the pigment.

The dispersed particle size of the ink obtained by the production process of the present invention may vary depending upon the kind and use or applications of the pigment, and is, for example, preferably not less than 40 nm, more preferably not less than 60 nm and even more preferably not less than 80 nm, and is also preferably not more than 115 nm and more preferably not more than 110 nm.

The dispersed particle size of the ink may be measured by the method described in Examples below.

With respect to the aforementioned embodiments, the present invention further provides the following aspects relating to the process for producing a fine organic pigment, the process for producing a dispersion using the fine organic pigment, and the process for producing an ink using the dispersion.

<1> A process for producing a fine organic pigment, including:

Step 1: kneading a mixture prepared by compounding a raw material organic pigment, a water-soluble inorganic salt and a water-soluble organic solvent; and
Step 2: subjecting the kneaded mixture obtained in the step 1 to cleaning treatment with an aqueous solvent and then to filtration treatment,

in which before or after kneading the mixture in the step 1 and before subjecting the kneaded mixture to filtration treatment in the step 2, a sulfonic acid salt dispersant is compounded in an amount of not less than 0.8 part by mass and not more than 8.0 parts by mass on the basis of 100 parts by mass of the raw material organic pigment.

<2> The process for producing a fine organic pigment according to the aspect <1>, wherein the raw material organic pigment is preferably at least one pigment selected from the group consisting of quinacridone pigments and diketopyrrolopyrrole pigments, and more preferably a quinacridone pigment.

<3> The process for producing a fine organic pigment according to the aspect <1> or <2>, wherein a primary particle size of the raw material organic pigment is preferably not more than 500 nm, more preferably not more than 300 nm and even more preferably not more than 150 nm, and is also preferably not less than 30 nm, more preferably not less than 45 nm and even more preferably not less than 60 nm.

<4> The process for producing a fine organic pigment according to any one of the aspects <1> to <3>, wherein the water-soluble inorganic salt is preferably at least one compound selected from the group consisting of an alkali metal chloride and an alkali metal sulfate, and more preferably an alkali metal chloride.

<5> The process for producing a fine organic pigment according to any one of the aspects <1> to <3>, wherein the water-soluble inorganic salt is preferably at least one compound selected from the group consisting of sodium chloride, potassium chloride, sodium sulfate, zinc chloride, calcium chloride and magnesium chloride, more preferably at least one compound selected from the group consisting of sodium chloride and sodium sulfate, and even more preferably sodium chloride.

<6> The process for producing a fine organic pigment according to any one of the aspects <1> to <5>, wherein the water-soluble organic solvent is an aliphatic compound containing not less than 1 and not more than 3 alcoholic hydroxy groups.

<7> The process for producing a fine organic pigment according to any one of the aspects <1> to <6>, wherein the water-soluble organic solvent is preferably a polyhydric alcohol, more preferably at least one compound selected from the group consisting of a dihydric alcohol and a trihydric alcohol, even more preferably at least one compound selected from the group consisting of glycol-based solvents such as diethylene glycol, propylene glycol, triethylene glycol and polyethylene glycol, and glycerin, and further even more preferably diethylene glycol.

<8> The process for producing a fine organic pigment according to any one of the aspects <1> to <7>, wherein a boiling point of the water-soluble organic solvent is preferably not lower than 100°C and more preferably not lower than 200°C, and is also preferably not higher than 280°C and more preferably not higher than 260°C.

<9> The process for producing a fine organic pigment according to any one of the aspects <1> to <8>, wherein the sulfonic acid salt dispersant is preferably at least one salt selected from the group consisting of alkanesulfonic acid salts, $\alpha$-olefinsulfonic acid salts, alkylbenzenesulfonic acid salts, alkylnaphthalenesulfonic acid salts, alkyldiphenyletherdisulfonic acid salts, polystyrenesulfonic acid salts, basic salts of aromatic sulfonic acid formalin condensation products and dialkyl sulfosuccinic acid salts, and more preferably at least one salt selected from the group consisting of basic salts of aromatic sulfonic acid formalin condensation products and dialkyl sulfosuccinic acid salts.

<10> The process for producing a fine organic pigment according to any one of the aspects <1> to <9>, wherein the sulfonic acid salt dispersant is a basic salt of a naphthalenesulfonic acid formalin condensation product.

<11> The process for producing a fine organic pigment according to any one of the aspects <1> to <10>, wherein an amount of the sulfonic acid salt dispersant compounded is preferably not less than 1.2 parts by mass, more preferably not less than 3.0 parts by mass, even more preferably not less than 4.0 parts by mass, further even more preferably not less than 5.0 parts by mass, still further even more preferably not less than 6.0 parts by mass and still further even more preferably not less than 6.5 parts by mass, and is also preferably not more than 7.5 parts by mass and more preferably not more than 7.0 parts by mass, on the basis of 100 parts by mass of the raw material organic pigment.

<12> The process for producing a fine organic pigment according to any one of the aspects <1> to <11>, wherein an amount of the sulfonic acid salt dispersant compounded is preferably not less than 0.05 % by mass, more preferably not less than 0.07 % by mass, even more preferably not less than 0.1 % by mass, further even more preferably not less than 0.3 % by mass and still further even more preferably not less than 0.5 % by mass, and is also preferably not more than 2 % by mass, more preferably not more than 1.5 % by mass, even more preferably not more than 1.2 % by mass and further even more preferably not more than 1 part by mass, on the basis of the mixture obtained by compounding the raw material organic pigment, the water-soluble inorganic salt and the water-soluble organic solvent.

<13> The process for producing a fine organic pigment according to any one of the aspects <1> to <12>, wherein the step 1 includes:

Step 1-1: mixing the raw material organic pigment, the water-soluble inorganic salt and the water-soluble organic solvent with each other; and
Step 1-2: kneading a mixture containing the mixture obtained in the step 1-1, the sulfonic acid salt dispersant and at least one material as an optional component selected from the group consisting of water and a water-soluble basic compound.

<14> The process for producing a fine organic pigment according to any one of the aspects <1> to <13>, wherein a temperature of the mixture upon kneading it in the step 1 is preferably not higher than 120°C, more preferably not higher than 100°C, even more preferably not higher than 80°C and further even more preferably not higher than 60°C, and is also preferably not lower than 20°C and more preferably not lower than 40°C, and a time of the kneading is preferably not less than 0.5 hour, more preferably not less than 1 hour and even more preferably not less than 1.5 hours, and is also preferably not more than 15 hours, more preferably not more than 10 hours, even more preferably not more than 5 hours and further even more preferably not more than 3.5 hours.

<15> The process for producing a fine organic pigment according to any one of the aspects <1> to <14>, wherein an amount of the water-soluble inorganic salt compounded in the mixture to be kneaded is preferably not less than 100 parts by mass, more preferably not less than 300 parts by mass and even more preferably not less than 400 parts by mass, and is also preferably not more than 3000 parts by mass, more preferably not more than 1000 parts by mass, even more preferably not more than 800 parts by mass and further even more preferably not more than 600 parts by mass, on the basis of 100 parts by mass of the raw material organic pigment.

<16> The process for producing a fine organic pigment according to any one of the aspects <1> to <15>, wherein an amount of the water-soluble organic solvent compounded in the mixture to be kneaded is preferably not less than 10 parts by mass, more preferably not less than 50 parts by mass and even more preferably not less than 100 parts by mass, and is also preferably not more than 500 parts by mass, more preferably not more than 300 parts by mass, even more preferably not more than 200 parts by mass and further even more preferably not more than 150 parts by mass, on the basis of 100 parts by mass of the raw material organic pigment.

<17> The process for producing a fine organic pigment according to any one of the aspects <1> to <16>, wherein a ratio of a primary particle size of the fine organic pigment to a primary particle size of the raw material organic pigment (primary particle size of fine organic pigment/primary particle size of raw material organic pigment) is preferably not more than 0.95, more preferably not more than 0.8, even more preferably not more than 0.7 and further even more preferably not more than 0.65, and is also preferably not less than 0.01, more preferably not less than 0.1, even more preferably not less than 0.2, further even more preferably not less than 0.3, still further even more preferably not less than 0.4 and still further even more preferably not less than 0.5.

<18> The process for producing a fine organic pigment according to any one of the aspects <1> to <17>, wherein the primary particle size of the fine organic pigment is preferably not less than 10 nm, more preferably not less than 20 nm, even more preferably not less than 30 nm, further even more preferably not less than 40 nm and still further even more preferably not less than 50 nm, and is also preferably not more than 130 nm, more preferably not more than 100 nm, even more preferably not more than 70 nm and further even more preferably not more than 60 nm.

<19> A use of the fine organic pigment produced by the process according to any one of the aspects <1> to <18> for ink-jet printing.

<20> A use of the fine organic pigment produced by the process according to any one of the aspects <1> to <18> for a printing ink.

<21> A use of the fine organic pigment produced by the process according to any one of the aspects <1> to <18> for a color filter.

<22> A process for producing a dispersion, further including:

Step 3: subjecting a pigment mixture containing the fine organic pigment produced by the process according to any one of the aspects <1> to <18>, an organic solvent and water to dispersion treatment.

<23> The process for producing a dispersion according to the aspect <22>, wherein the fine organic pigment is a paste of the fine organic pigment obtained in the step 2.

<24> The process for producing a dispersion according to the aspect <22>, wherein the fine organic pigment is a powdery fine organic pigment obtained by further subjecting the paste of the fine organic pigment obtained in the step 2 to drying and pulverization.

<25> The process for producing a dispersion according to any one of the aspects <22> to <24>, wherein the pigment mixture further contains a vinyl-based polymer containing a constitutional unit derived from (a) an anionic monomer and a constitutional unit derived from (b) an hydrophobic monomer.

<26> A process for producing an ink, further including:

Step 4: mixing the dispersion produced by the process according to any one of the aspects <22> to <25> with at least one medium selected from the group consisting of water and an organic solvent.

<27> A use of the ink produced by the process according to the aspect <26> for ink-jet printing.

EXAMPLES

In the following Examples, etc., various numerical values of properties or characteristics were measured and evaluated by the following methods.

[Measurement of Primary Particle Size of Pigment]

A dispersion obtained by adding 0.05 g of a powdery pigment to 50 g of ethanol is treated using an ultrasonic cleaner "ASU CLEANER ASU-10M" (intensity: "high") available from AS ONE Corporation for 5 minutes. The resulting pigment dispersion is placed on a sampling table for a transmission electron microscope (TEM) and air-dried, and then photographed by TEM at a magnification of 1 to 100,000 times to obtain a micrograph image. From the obtained image, about 500 pigment particles are randomly sampled, and all of the thus sampled particles are measured for their major axis diameters to calculate a number-average value of the measured diameters which is defined as a primary particle size of the pigment.

[Measurement of Solid Content]

A petri dish is charged with 10 g of dried anhydrous sodium sulfate and fitted with a glass bar, and 1 g of a sample is weighed and added into the petri dish, and the contents of the petri dish are mixed by the glass bar and then dried at 105°C for 2 hours. The mass of the contents of the petri dish after being dried is measured to calculate a solid content of the sample according to the following formula.

$$\text{Solid content (\% by mass)} = [(\text{mass (g) of contents of petri dish after being dried}) - (\text{total mass (g) of petri dish, glass bar and dried anhydrous sodium sulfate})]/(\text{mass (g) of sample}) \times 100$$

[Measurement of Dispersed Particle Size of Ink]

The cumulant average particle size of particles in the ink is measured using a laser particle analyzing system "ELS-8000" available from Otsuka Electronics Co., Ltd., by cumulant analysis (temperature: 25°C; angle between incident light and detector: 90°; cumulative number: 100 times; refractive index of dispersing solvent: 1.333), and the thus measured cumulant average particle size is defined as a dispersed particle size of the ink. The measurement was conducted by adjusting a concentration of a sample to be measured to about $5 \times 10^{-3}$% by mass by adding ion-exchanged water thereto.

(Optical Density)

The water-based ink as a sample to be measured is loaded into a commercially available ink-jet printer "GX-2500" (piezoelectric type) available from Ricoh Co., Ltd., and printing of an A4 size solid image (monochrome) is carried out on a plain paper "4200 Business Copier/Laser Copy Paper" (basis weight: 75 g/m$^2$) available from Xerox Corporation (USA) at 23°C and a relative humidity of 50% under the printing condition of "glossy coated paper; Clean; no color matching". After completion of the printing, the resulting printed paper is allowed to stand at 23°C and a relative humidity of 50% for 24 hours to dry the solid image printed, thereby obtaining a printed material.

The optical density of a solid image portion of the resulting printed material is measured by an optical densitometer "SpectroEye" available from GretagMacbeth GmbH under the measuring mode of DIN; Abs.

[Examples 1 and 3 to 7 and Comparative Examples 3 to 5]

[Step 1 and Step 2: Production of Fine Organic Pigment]

(Step 1: Kneading Step)

The following procedure was conducted as the step 1. That is, the raw material organic pigment (C.I. Pigment Red 122), water-soluble inorganic salt (sodium chloride) and water-soluble organic solvent (diethylene glycol) as shown in Table 1 were sampled in such amounts as shown in Table 1 and kneaded together using a pressure-type kneader "TD0.5-3M Model" available from Toshin Co., Ltd., without application of a pressure thereto at a rotating speed of 30 r/min for 0.5 hour while maintaining the contents of the kneader at a temperature of from 40 to 60°C (Step 1-1). Furthermore, the dispersant as shown in Table 1 was added to the kneader (time of addition: A), and the contents of the kneader were kneaded under the same conditions as described above for 2.0 hours.

(Step 2: Cleaning Step)

The following procedure was conducted as the step 2. That is, the kneaded mixture obtained in the aforementioned step 1 was added to 3000 g of water, followed by stirring the obtained mixture for 1 hour. The resulting dispersion was fed under a pressure of 0. 2 MPa into a chamber (filter chamber capacity: 763 cm$^3$; filtration area: 513 cm$^2$) of a filter press (Yabuta-type filter press) "ROUND TESTER YTO-8 Model" available from Yabuta Kikai Co., Ltd. Next, 50 L of water was fed under a pressure of 0.2 MPa into the chamber to remove the water-soluble inorganic salt and the water-soluble organic solvent therefrom, and further the resulting material was pressed under a pressure of 0.4 MPa to thereby obtain a pigment paste.

(Step 2-2: Drying Step)

In the respective Examples or Comparative Examples as shown in Table 1 such that the drying step was "conducted", the resulting pigment paste was dried at 70°C for 24 hours, and pulverized in an agate mortar to obtain a powder of a fine organic pigment. On the other hand, in the respective Examples or Comparative Examples as shown in Table 1 such that the drying step was "not conducted", the present drying step was not carried out.

[Step 3: Preparation of Dispersions]

A pigment mixture was prepared by compounding 41.7 g of a styrene-acrylic acid-based polymer "Joncryl 68" available from BASF, 113.4 g of methyl ethyl ketone, 20.5 g of a 5N sodium hydroxide aqueous solution and a mixture of 500 g of the above-prepared pigment paste and 175.1 g of ion-exchanged water. The resulting pigment mixture was mixed using a disper blade at 20°C at a rotating speed of 7000 rpm for 1 hour, and further subjected to dispersion treatment by passing through "MICROFLUIDIZER" available from Microfluidics Corporation 10 times under a pressure of 150 MPa. The resulting dispersion was placed under reduced pressure at 60°C to remove methyl ethyl ketone therefrom, and then subjected to filtration treatment through a filter (acetyl cellulose membrane; pore size: 5 $\mu$m) available from FUJIFILM Corporation to control a solid content of the dispersion, thereby obtaining water dispersions 1, 3 to 7 and 53 to 55.

[Step 4: Preparation of Inks]

(Preparation of Ink Solvent)

Four grams (4.0 g) of 1,2-hexanediol available from Tokyo Chemical Industry Co., Ltd., 6.0 g of 2-pyrrolidone available from Wako Pure Chemical Industries Ltd., 15.0 g of glycerin available from Kao Corporation, 4.0 g of triethylene glycol monobutyl ether "Butyl Triglycol" available from Nippon Nyukazai Co., Ltd., 0.5 g of an acetylene glycol-based surfactant "SURFYNOL 465" available from Nissin Chemical Co., Ltd., 0.5 g of an acetylene glycol-based surfactant "OLFINE E1010" available from Nissin Chemical Industry Co., Ltd., 0.3 g of an antiseptic agent "Proxel XL2" available from Avecia Ltd., and 29.7 g of ion-exchanged water were uniformly mixed with each other, thereby preparing an ink solvent (hereinafter also referred to as a "vehicle").

(Preparation of Inks 1, 3 to 7 and 53 to 55)

While stirring 40 g of each of the water dispersions obtained in the aforementioned step 3 as shown in Table 1, the vehicle was added and mixed therein such that the solid content of the obtained dispersion was 10% by mass, and then the resulting dispersion was subjected to filtration treatment through a filter (acetyl cellulose membrane; pore size: 1.2 µm) available from FUJIFILM Corporation, thereby obtaining inks 1, 3 to 7 and 53 to 55.
The evaluation results of the resulting inks 1, 3 to 7 and 53 to 55 are shown in Table 1.

[Example 2]

The same procedure as in Example 1 was repeated except that instead of adding the dispersant in the step 1, the dispersant was added at the time at which the kneaded mixture obtained in the step 1 was added to 3000 g of water in the step 2 (time of addition: B), thereby obtaining a water dispersion 2 and an ink 2. The evaluation results of the water dispersion 2 and the ink 2 are shown in Table 1.

[Comparative Example 1]

The same procedure as in Example 1 was repeated except that no dispersant was added in the step 1, and a mixture of 125 g of a powder of the fine organic pigment and 550.1 g of ion-exchanged water was prepared instead of preparing the mixture of 500 g of the pigment paste and 175.1 g of ion-exchanged water in the step 3, thereby obtaining a water dispersion 51 and an ink 51. The evaluation results of the water dispersion 51 and the ink 51 are shown in Table 1.

[Comparative Example 2]

The same procedure as in Comparative Example 1 was repeated except that no dispersant was added in the step 1, and the dispersant was added at the time at which the mixture of the powder of the fine organic pigment and ion-exchanged water was prepared in the step 3 (time of addition: C), thereby obtaining a water dispersion 52 and an ink 52. The evaluation results of the water dispersion 52 and the ink 52 are shown in Table 1.

TABLE 1-1

| | Kneading step | | | | | | Drying step |
|---|---|---|---|---|---|---|---|
| | (A) Raw material organic pigment | (B) Water-soluble inorganic salt | (C) Water-soluble organic solvent | (D) Dispersant | | | |
| | Amount compounded*1 (part(s) by mass) | Amount compounded*1 (part(s) by mass) | Amount compounded*1 (part(s) by mass) | Kind | Amount compounded*1 (part(s) by mass) | Time of addition*2 | |
| Example 1 | 100 | 500 | 123 | D-1 | 5.0 | A | Not conducted |
| Example 2 | 100 | 500 | 123 | D-1 | 5.0 | B | Not conducted |
| Example 3 | 100 | 500 | 123 | D-2 | 5.0 | A | Not conducted |
| Example 4 | 100 | 500 | 123 | D-3 | 5.0 | A | Not conducted |
| Example 5 | 100 | 500 | 123 | D-4 | 5.0 | A | Not conducted |
| Example 6 | 100 | 500 | 123 | D-1 | 1.0 | A | Not conducted |
| Example 7 | 100 | 500 | 123 | D-1 | 7.0 | A | Not conducted |
| Comparative Example 1 | 100 | 500 | 123 | - | - | - | Conducted |
| Comparative Example 2 | 100 | 500 | 123 | (D-1) | (5.0) | C | Conducted |
| Comparative Example 3 | 100 | 500 | 123 | - | - | - | Not conducted |
| Comparative Example 4 | 100 | 500 | 123 | D-5 | 5.0 | A | Not conducted |

(continued)

| | Kneading step | | | | | | Drying step |
|---|---|---|---|---|---|---|---|
| | (A) Raw material organic pigment | (B) Water-soluble inorganic salt | (C) Water-soluble organic solvent | (D) Dispersant | | | |
| | Amount compounded*1 (part(s) by mass) | Amount compounded*1 (part(s) by mass) | Amount compounded*1 (part(s) by mass) | Kind | Amount compounded*1 (part(s) by mass) | Time of addition*2 | |
| Comparative Example 5 | 100 | 500 | 123 | D-1 | 10.0 | A | Not conducted |

Note *1: Amount (part(s) by mass; based on active ingredients) compounded on the basis of 100 parts by mass of component (A).

*2: Time of addition: A: Upon mixing raw materials in step 1; B: After treating (kneading) by kneader in step 1; C: After drying step.

*3: [Primary particle size of fine organic pigment]/[primary particle size of raw material organic pigment]

TABLE 1-2

| | Fine organic pigment | | Water dispersion | | Ink | | |
|---|---|---|---|---|---|---|---|
| | Primary particle size (nm) | Primary particle size ratio*3 | No. | Solid content (% by mass) | No. | Dispersed particle size (nm) | Optical density |
| Example 1 | 56.1 | 0.62 | 1 | 20 | 1 | 110 | 1.12 |
| Example 2 | 86.3 | 0.95 | 2 | 20 | 2 | 105 | 1.10 |
| Example 3 | 58.9 | 0.65 | 3 | 20 | 3 | 103 | 1.09 |
| Example 4 | 57.4 | 0.63 | 4 | 20 | 4 | 90 | 1.10 |
| Example 5 | 56.3 | 0.62 | 5 | 20 | 5 | 100 | 1.03 |
| Example 6 | 56.5 | 0.62 | 6 | 20 | 6 | 102 | 1.03 |
| Example 7 | 58.4 | 0.64 | 7 | 20 | 7 | 106 | 1.16 |
| Comparative Example 1 | 57.1 | 0.63 | 51 | 20 | 51 | 113 | 1.00 |
| Comparative Example 2 | 87.5 | 0.96 | 52 | 20 | 52 | 125 | 1.10 |
| Comparative Example 3 | 57.1 | 0.63 | 53 | 20 | 53 | 110 | 1.01 |
| Comparative Example 4 | 54.8 | 0.60 | 54 | 20 | 54 | 98 | 0.98 |
| Comparative Example 5 | 59.2 | 0.65 | 55 | 20 | 55 | 120 | 1.20 |

Meanwhile, the raw material organic pigments, water-soluble inorganic salts, water-soluble organic solvents and water-soluble basic compounds used in the respective Examples and Comparative Examples as well as properties thereof as shown in Table 1 are as follows.

Raw material organic pigment: PR122 (2,9-dimethyl quinacridone; "CFR002" available from Dainichiseika Color & Chemicals Mfg. Co., Ltd.; primary particle size: 91 nm)

Water-soluble inorganic salt: Sodium chloride ("OSHIO MICRON T-0" available from Ako Kasei Co., Ltd.; average particle size: 10 μm)

Water-soluble organic solvent: Diethylene glycol ("Special Grade" available from Wako Pure Chemical Industries, Ltd.; boiling point: 244°C; solidification point: -10.5°C)

[Dispersant]

D-1: Sodium salt of $\beta$-naphthalenesulfonic acid formalin condensation product "DEMOL NL" (active ingredient content: 40% by mass) available from Kao Corporation
D-2: Ammonium salt of $\beta$-naphthalenesulfonic acid formalin condensation product "DEMOL AS" (active ingredient content: 100% by mass) available from Kao Corporation
D-3: Sodium salt of special aromatic sulfonic acid formalin condensation product "DEMOL SN-B" (active ingredient content: 40% by mass) available from Kao Corporation
D-4: Sodium dialkylsulfosuccinate "PELEX OT-P" (sodium dioctylsulfosuccinate; active ingredient content: 70% by mass) available from Kao Corporation
D-5: Sodium polyoxyethylenealkylethersulfate "LEVENOL WX" (active ingredient content: 26% by mass) available from Kao Corporation

From the comparison between Examples 1 to 7 and Comparative Examples 1 to 5, it was recognized that when producing the water-based ink using the pigment paste obtained by the process for production of the fine organic pigment including the step 1 and the step 2 in which the sulfonic acid dispersant was used in the predetermined amount, the resulting ink had a fine dispersed particle size and further was excellent in optical density upon printing.

Industrial Applicability

According to the present invention, there is provided a useful process for producing a fine organic pigment which can be used in the applications such as inks for inkjet printing and color filters.

**Claims**

1. A process for producing a fine organic pigment, comprising:

   Step 1: kneading a mixture prepared by compounding a raw material organic pigment, a water-soluble inorganic salt and a water-soluble organic solvent; and
   Step 2: subjecting the kneaded mixture obtained in the step 1 to cleaning treatment with an aqueous solvent and then to filtration treatment,

   in which before or after kneading the mixture in the step 1 and before subjecting the kneaded mixture to filtration treatment in the step 2, a sulfonic acid salt dispersant is compounded in an amount of not less than 0.8 part by mass and not more than 8.0 parts by mass on the basis of 100 parts by mass of the raw material organic pigment.

2. The process for producing a fine organic pigment according to claim 1, wherein the sulfonic acid salt dispersant is at least one compound selected from the group consisting of a basic salt of an aromatic sulfonic acid formalin condensation product and a dialkyl sulfosuccinic acid salt.

3. The process for producing a fine organic pigment according to claim 1 or 2, wherein the sulfonic acid salt dispersant is a basic salt of a naphthalenesulfonic acid formalin condensation product.

4. The process for producing a fine organic pigment according to any one of claims 1 to 3, wherein the water-soluble inorganic salt is at least one compound selected from the group consisting of an alkali metal chloride and an alkali metal sulfate.

5. The process for producing a fine organic pigment according to any one of claims 1 to 4, wherein the water-soluble organic solvent is an aliphatic compound comprising not less than 1 and not more than 3 alcoholic hydroxy groups.

6. The process for producing a fine organic pigment according to any one of claims 1 to 5, wherein the step 1 comprises:

   Step 1-1: mixing the raw material organic pigment, the water-soluble inorganic salt and the water-soluble organic solvent with each other; and
   Step 1-2: kneading the mixture obtained in the step 1-1 with the sulfonic acid salt dispersant.

7. The process for producing a fine organic pigment according to any one of claims 1 to 6, wherein an amount of the sulfonic acid salt dispersant compounded is not less than 0.05% by mass and not more than 2% by mass on the basis of the mixture prepared by compounding the raw material organic pigment, the water-soluble inorganic salt and the water-soluble organic solvent.

8. The process for producing a fine organic pigment according to any one of claims 1 to 7, wherein a temperature of the mixture upon kneading the mixture in the step 1 is not higher than 100°C and not lower than 20°C, and a time of kneading the mixture in the step 1 is not less than 0.5 hour and not more than 15 hours.

9. The process for producing a fine organic pigment according to any one of claims 1 to 8, wherein a ratio of a primary particle size of the fine organic pigment to a primary particle size of the raw material organic pigment (primary particle size of fine organic pigment/primary particle size of raw material organic pigment) is not more than 0.95.

10. The process for producing a fine organic pigment according to any one of claims 1 to 9, wherein the primary particle size of the fine organic pigment is not less than 30 nm and not more than 70 nm.

11. A use of the fine organic pigment produced by the process according to any one of claims 1 to 10 for ink-jet printing.

12. A process for producing a dispersion, further comprising:
Step 3: subjecting a pigment mixture comprising the fine organic pigment produced by the process according to any one of claims 1 to 10, an organic solvent and water to dispersion treatment.

13. The process for producing a dispersion according to claim 12, wherein the fine organic pigment is a paste of the fine organic pigment obtained in the step 2.

14. The process for producing a dispersion according to claim 12, wherein the fine organic pigment is a powdery fine organic pigment obtained by further subjecting a paste of the fine organic pigment obtained in the step 2 to drying and pulverization.

15. A process for producing an ink, further comprising:
Step 4: mixing the dispersion produced by the process according to any one of claims 12 to 14 with at least one medium selected from the group consisting of water and an organic solvent.

## INTERNATIONAL SEARCH REPORT

International application No.

PCT/JP2017/027010

### A. CLASSIFICATION OF SUBJECT MATTER
*C09B67/04*(2006.01)i, *C09D11/322*(2014.01)i

According to International Patent Classification (IPC) or to both national classification and IPC

### B. FIELDS SEARCHED

Minimum documentation searched (classification system followed by classification symbols)
C09B67/04, C09D11/322

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2000-275430 A (Toyo Ink Manufacturing Co., Ltd.),<br>06 October 2000 (06.10.2000),<br>paragraphs [0004], [0027], [0046], [0047]; examples<br>(Family: none) | 1-15 |
| Y | WO 2010/101210 A1 (Fujifilm Corp.),<br>10 September 2010 (10.09.2010),<br>paragraphs [0002], [0132]<br>& JP 2010-209160 A      & CN 102341462 A<br>& TW 201038678 A      & KR 10-2011-0124356 A | 1-15 |

☒ Further documents are listed in the continuation of Box C.     ☐ See patent family annex.

| | |
|---|---|
| *   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 01 September 2017 (01.09.17) | 12 September 2017 (12.09.17) |

| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2017/027010

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-273605 A  (Toyo Ink Manufacturing Co., Ltd.), 13 October 1998 (13.10.1998), paragraph [0024] (Family: none) | 1-15 |
| Y | JP 2015-193744 A  (Nippon Kayaku Co., Ltd.), 05 November 2015 (05.11.2015), claims; paragraph [0081]; table 2 (Family: none) | 12-15 |
| Y | JP 2008-517113 A  (Clariant Produkte (Deutschland) GmbH), 22 May 2008 (22.05.2008), claims; paragraphs [0056] to [0057]; examples 1 to 7 & US 2007/0261596 A1 claims; paragraphs [0103] to [0104]; examples 1 to 7 & WO 2006/045396 A1 | 12-15 |
| A | JP 2002-146028 A  (Nippon Paper Industries Co., Ltd.), 22 May 2002 (22.05.2002), paragraph [0019] (Family: none) | 1-15 |
| A | JP 52-152422 A  (Tokuyama Soda Co., Ltd.), 17 December 1977 (17.12.1977), claims; example 1 (Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011252123 A

**Non-patent literature cited in the description**

- ROUND TESTER YTO-8 Model. Yabuta Kikai Co., Ltd,